# EUROPEAN PATENT APPLICATION

(11) **EP 2 141 541 A1**
(43) Date of publication of application: **06.01.2010**
(21) Application number: 09164147.2
(22) Date of filing: 30.06.2009
(51) Int. Cl.: G03B 21/16

(54) **System for cooling a display**

(30) Priority: 02.07.2008 DK 200800923
(71) Applicant: Martin Professional A/S, 8200 Aarhus N (DK)
(72) Inventor: Manscher, Peter, 8250, Egå (DK)
(74) Representative: Gregersen, Niels Henrik

(57) **Abstract**

The present invention relates to a system for cooling a display in a moving head projector, which moving head comprises a head rotatable in relation to a yoke, which yoke is rotatable in relation to a base, which base comprises at least one display, which display is cooled. It is the object of the invention to protect and cool a LCD display. The object can be fulfilled by a system if modified by protecting the display by a front cover where between front cover and the display is formed a cooling channel, in which cooling channel an air stream is flowing. Hereby can be achieved a highly effective combined protection and cooling of a display.

## Description

### Field of the Invention

The present invention relates to a system for cooling a display in a moving head projector, which moving head comprises a head rotatable in relation to a yoke, which yoke is rotatable in relation to a base, which base comprises at least one display, which display is cooled.

### Background of the Invention

JP 11271882 concerns cooling of a three liquid crystal plates for elimination of a temperature difference. Different cooling fans generates a cross flow of cooling air over the surface of the liquid crystal plates. The electric supply for the cooling fans is driven by an external power source or a solar battery.

Cooling only the outside of a LCD display is possible, but if the LCD display is directly exposed to the outer side no protection against IR radiation and no shield for UV light is achieved.

### Object of the Invention

It is the object of the invention to protect and cool a LCD display.

### Description of the Invention

The object can be fulfilled by a system as described in the preamble to claim 1 if modified by protecting the display by a front cover where between front cover and the display is formed a cooling channel, in which cooling channel an air stream is flowing.

Hereby can be achieved a highly effective combined protection and cooling of a display. Outside a light fixture, the temperature is high because of heat generated in the light fixture. Outside the light fixture, radiation of IR light is mostly also hating a display. Cooling of the display is therefore necessary A protective front cover is often used because the surface of a display is rather easy to destroy by tools or perhaps even by finger nails. Forming a cooling channel between the display and the front cover makes a highly effective cooling of the display. This ensures a correct operation of the display even if the temperature in the inside of an apparatus or outside the apparatus is higher then the temperature at the display. The temperature of the display can be kept at least only a few degrees above the outside temperature. Keeping the temperature of the display low will ensure that the display can operate correctly during normal operation in a hard environment.

The front cover can comprise an IR protective filter. By protecting against IR radiation it is avoided that the display is being heated by radiated infrared light. Infrared light radiated directly to the surface of a display might increase the temperature at the surface of the display into a temperature where the display is in a failure situation and information can no longer be seen at the surface of the display. The increase in temperature can also lead to a total destruction of a display. Stopping IR radiation from the outside is eliminating further source of failure that can lead to malfunction of the display.

The front cover can comprise an UV protective filter. Sometimes displays are highly sensitive to UV light. The ultraviolet light has a high concentration of energy and can destroy e.g. liquid crystal displays by destroying the organic chemical structure that is being used in that kind of display.

The cooling channel can have an inlet connected to a blower. The most effective cooling could be achieved by using blowing means for achieving an air stream in the channel between the front cover and the display. In a possible embodiment of the invention, it is possible that there is connected speed regulation to the blower and that temperature is sensed somewhere in the channel or at the display in order to control the speed of the blower and therefore also the demand for cooling is to be adjusted.

The cooling channel can be connected to an outlet, which outlet can be open to the outside of the base. One possibility is to let the channel be open to the outside, but e.g. in a base for a light fixture it is possible that air used for cooling the display still has a temperature that is low in relation to other components in the inner of the base and the air can be let into the inner of the base where further cooling can be achieved.

The channel outlet can be connected to a duct, which duct can turn the direction of the airflow and direct the airflow into a direction mostly parallel to the outer side of the front cover. Hereby it can be achieved that the cooling air is being reused. Cooling the protective cover at the outside will at least reduce the temperature of the outer surface of the protective cover. Keeping the protective cover at a low temperature will further reduce the temperature in the channel below the protective cover and in that way also cool the display further.

### Description of the Drawing

Figure 1 shows a first possible embodiment for an invention.
Figure 2 shows an alternative embodiment for the invention.
Figure 3 shows a sectional view of a display system as shown at the figure 2.

### Detailed Description of the Invention

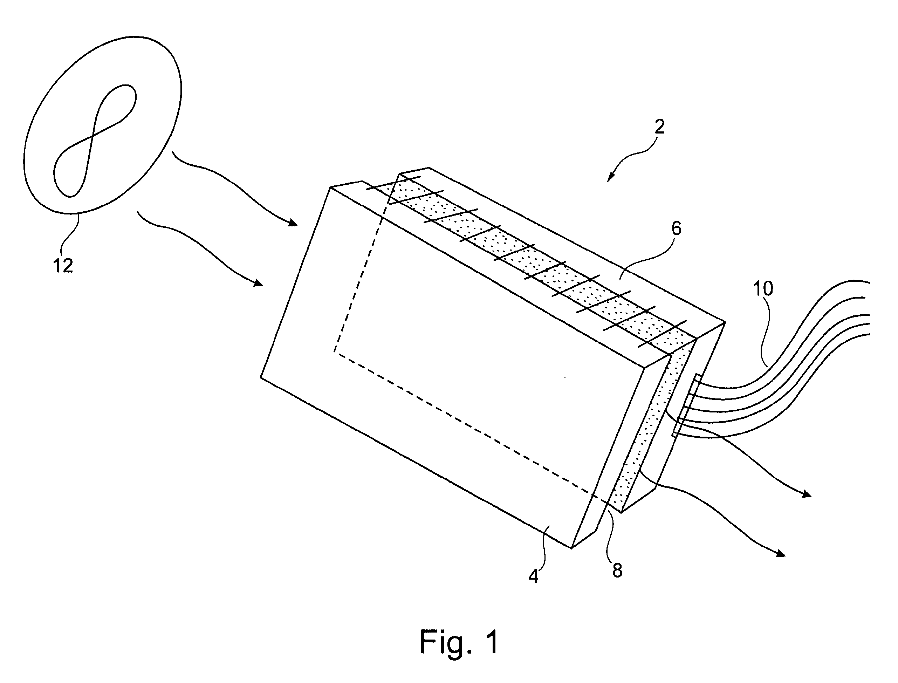

Figure 1 shows a first possible embodiment for an invention. A display module 2 comprises a front cover 4 and a display 6. In between the front cover and the display is formed at channel 8. Further is seen a cable 10 which is connected to the display 6. Blowing means 12 are generating an air stream which is flowing to the channel 8.

In stead of using an active blower 8, it could in some embodiments be possible simply to use natural convection for generating the air stream between the front cover 4 and the display 6. If the air that is leaving the channel is by a channel sent in and further heated, it is possible in this way to generate an air stream that is sufficient for cooling the display.

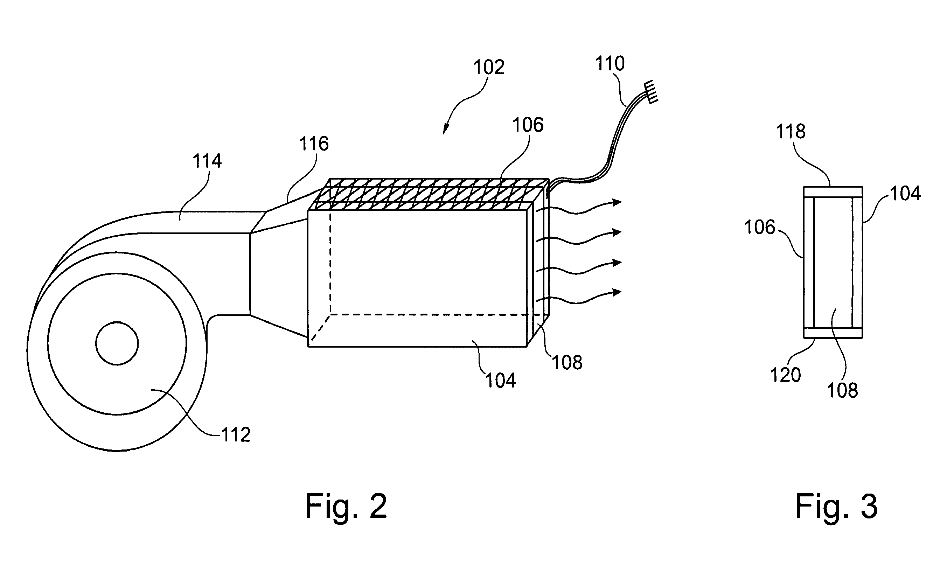

Figure 2 shows an alternative embodiment for the invention. Figure 2 shows a system 102 which comprises a protective cover 104 and a display 106. In between said protective cover and display, a channel 108 is formed. Cabling 110 is connected to the display 106. A radial blower 112 is indicated which comprises an outlet duct 114 which is connected to a further connection duct 116.

Also the blower 112 can be speed regulated dependent of a temperature sensor placed somewhere at the display 106 or in the channel 108.

Figure 3 shows a sectional view of a display system as shown at the figure 2. The protective cover 104 and the display 106 are forming sides of the channel 108. The channel 108 has further a top 118 and a bottom 120.

Hereby, it is seen that a closed channel 108 is formed.

## Claims

1. System (2,102) for cooling a display (6,106) in a moving head, which moving head comprises a head rotate able in relation to a yoke, which yoke is rotate able in relation to a base, which base comprises at least one display (6,106), which display (6,106) is cooled, **characterized in that** the display (6,106) is protected by a front cover (4,104), between front cover (4,104) and the display (6,106) is formed a cooling channel (8,108), in which cooling channel (8,108) an air stream is flowing.

2. System (2,102) for cooling a display (6,106) according to claim 1, **characterized in that** the front cover (4,104) comprises an IR protective filter.

3. System (2,102) for cooling a display (6,106) according to claim 1, **characterized in that** the front cover (4,104) comprises an UV protective filter.

4. System (2,102) for cooling a display (6,106) according to claim 1, **characterized in that** the cooling channel (8,108) has an inlet connected to a blower.

5. System (2,102) for cooling a display (6,106) according to claim 4, **characterized in that** the cooling channel (8,108) is connected to an outlet, which outlet is open to the outside of the base.

6. System (2,102) for cooling a display (6,106) according to claim 5, **characterized in that** the channel (8,108) outlet is connected to a duct, which duct turns the direction of the airflow and direct the airflow into a direction mostly parallel to the outer side of the front cover (4,104).
